# EUROPEAN PATENT APPLICATION

(11) **EP 3 089 554 A1**
(43) Date of publication of application: **02.11.2016**
(21) Application number: 16154484.6
(22) Date of filing: 05.02.2016
(51) Int. Cl.: H05B 33/08

(54) **WIRELESS COMPOSITE DEVICE**

(30) Priority: 28.04.2015 TW 104206437 U
(71) Applicant: Unity Opto Technology Co., Ltd., San Chung City, Taipei Hsien, Taiwan (TW)
(72) Inventor: WU, Chih-Hsien, NEW TAIPEI CITY (TW); CHANG, Wei, NEW TAIPEI CITY (TW); CHUANG, Kai-Cheng, NEW TAIPEI CITY (TW); CHEN, Yi-Shu, NEW TAIPEI CITY (TW)
(74) Representative: Cabinet Chaillot

(57) **Abstract**

A wireless composite device includes an antenna, an AC-to-DC driving circuit, an LED circuit board and a router. The AC-to-DC driving circuit converts an inputted AC into an outputted DC through a transmission signal of an antenna and supplies the outputted DC to drive the parallelly installed LED circuit board and router, so as to control the power conversion and supply of the AC-to-DC driving circuit through the wireless communication. In addition, different electronic devices are combined to save installation cost and space. Further, a multifunctional lamp including an antenna with a Bluetooth module, an LED driving circuit, at least one LED lamp and a router is disclosed. The LED driving circuit performs an AC-to-DC conversion through the Bluetooth communication and drives the LED lamp and the router, so that the lamp provides an illumination function and the router provides a network connection function.

## Description

### BACKGROUND OF THE INVENTION

### 1. Field of the Invention

The present invention relates to the field of electronic devices, and more particularly to a wireless composite device that integrates various electronic devices for sharing the same power supply and controlling the electronic devices through a wireless method.

### 2. Description of the Related Art

LED lamp is one of the necessary electric appliances in our daily life, and various types of LED lamps are designed according to the scope of applicability. As the technology of energy advances and the environmental awareness arises, LED with the features of excellent color rendering, high light emission efficiency and good eco-friendliness is used as a light source for most illumination lamps. The illumination lamp is generally connected to the mains power through a cable to obtain electric power for its application, and the LED is controlled by a driving control circuit to provide various lighting effects to users.

As the Internet becomes increasingly more popular, a router is usually installed at home or in office to serve as a device for sharing the network, so as to improve the efficiency of using the network. The router determines the path of network packets from an input end to an output end or serves as IP sharing to increase the number of the users using the Internet and setting the transmission path of the packets. As science and technology advance, a wireless router is available to serve as a communication device for wireless networks and cable networks, so that users may connect to the wireless network freely. When the router is used, a network cable is connected to the router, and the transmission path of the network packets is added through a port of the router, so as to achieve the effect of sharing the network. The router is connected to the mains power to receive the power supply required for the operation of the router.

As described above, the lamp and the router are necessary electronic devices and they (regardless of being installed indoor or outdoor) must be connected to the mains power before they can obtain the required electric power, regardless. In addition, the output current of the mains power is alternate current (AC) which cannot be used directly by the lamp and the router, so that a current/voltage converter is required and installed separately in the lamp and the router for supplying electric power to the lamp and the router. If a user wants to connect to a network, share the network, and have the illumination function, the user needs to install a router and a lamp at the desired location, and thus incurring additional costs and wasting spaces. Particularly, if the quantity of routers and lamps is large, the costs and spaces will be increased significantly. In addition, the electric wires and cables may be tangled easily, not only requiring time to untangle the wires and cables, but also affecting the appearance.

Nowadays, users pursue more convenience and higher degree of freedom for controlling the electronic devices, but many electronic devices such as lamps and routers being affected by the power driving level and many other factors are installed separately. As a result, the aforementioned problems occur. Therefore, the inventor of the present invention invented a wireless composite device to overcome the aforementioned problems and drawbacks and achieve the effect of integrating and unifying electronic products.

### SUMMARY OF THE INVENTION

In view of the problems of the prior art, it is a primary objective of the present invention to provide a wireless composite device for sharing an AC-to-DC driving circuit and combining an LED with a router to share a same external power supply for supplying electric power after converting an AC into a DC, so as to save installation costs and required spaces and perform related controls through a wireless method.

Another objective of the present invention is to provide a multifunctional lamp controlled through a wireless communication method and perform an AC-to-DC conversion of an external power supply to supply power to the LED lamp and the router, so that the lamp achieves the effects of providing illumination and network connection, saving costs and required spaces, and improving the convenience of control and application.

To achieve the aforementioned and other objectives, the present invention provides a wireless composite device sharing an AC-to-DC driving circuit, comprising: an antenna; an AC-to-DC driving circuit, electrically coupled to the antenna, for converting an inputted AC of an external power supply into an outputted DC according to a transmission signal of the antenna; an LED circuit board, electrically coupled to the AC-to-DC driving circuit, and driven by the outputted DC; and a router, electrically coupled to the AC-to-DC driving circuit, and driven by the outputted DC, and the LED circuit board and the router being installed in a parallel load setting with respect to each other.

Preferably, the transmission mode of the antenna is a Bluetooth or WiFi mode, and he AC-to-DC driving circuit converts and outputs at least two constant DC voltages of 3.3 volts or 5.0 volts to supply the required power.

In another embodiment, the present invention further discloses a multifunctional LED lamp, comprising: a control antenna, having a Bluetooth module; an LED driving circuit, electrically coupled to the control antenna, for converting an inputted AC of an external power supply into an outputted DC according to a transmission signal of the control antenna; at least one LED lamp, electrically coupled to the LED driving circuit, and driven by the outputted DC; and a router, electrically coupled to the LED driving circuit, and driven by the outputted DC, and the LED lamp and the router being installed in a parallel load setting with respect to each other.

Preferably, the LED driving circuit converts and outputs at least two constant DC voltages of 3.3 volts or 5.0 volts, and the Bluetooth module is an embedded serial communication module electrically coupled to the LED driving circuit through an external pin PI09.

In another implementation mode, the present invention further comprises a speaker driving circuit and a speaker, wherein the speaker driving circuit is electrically coupled to the external power supply for driving the speaker to improve the functionality of the multifunctional lamp.

In addition, preferably, the LED lamp, the router and the speaker are turned on or off and operated by a control through a mobile device. Preferably, the mobile device is a Smartphone or a tablet PC, so that users may control the multifunctional lamp from a remote position, so as to improve the convenience of using the multifunctional lamp.

In summation, the present invention controls the AC-to-DC driving circuit through a wireless communication while driving the LED circuit and the router to save costs for the power supply and provide tremendous convenience of use. The multifunctional lamp combines the LED lamp and the router, so that the multifunctional lamp can achieves the effects of providing the illumination by the LED lamp, the network connection function, reducing the installation cost, and saving the installation space. In addition, the present invention allows users to control a mobile device through the wireless communication. The multifunctional lamp further includes a speaker to provide a broadcasting function, and a mobile device is provided for controlling the wireless composite device to further improve the functionality and the convenience use of the wireless composite device.

### BRIEF DESCRIPTION OF THE DRAWINGS

FIG. 1 is a schematic block diagram of a first preferred embodiment of the present invention;
FIG. 2 is a schematic block diagram of a second preferred embodiment of the present invention;
FIG. 3 is a schematic view of an application of the second preferred embodiment of the present invention; and
FIG. 4 is a schematic block diagram of another implementation mode of the second preferred embodiment of the present invention.

### DETAILED DESCRIPTION OF THE PREFERRED EMBODIMENTS

The technical content of the present invention will become apparent with the detailed description of preferred embodiments and the illustration of related drawings as follows.

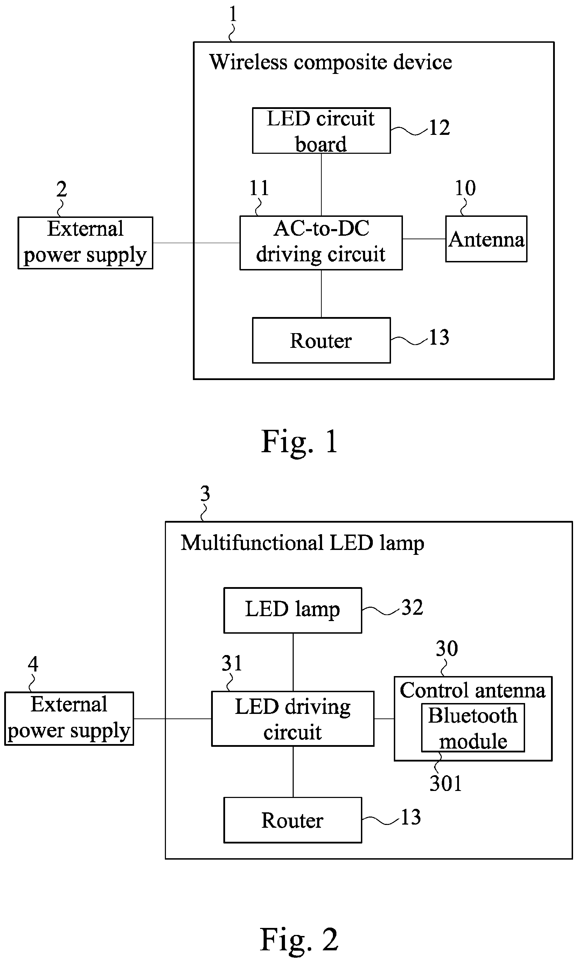

With reference to FIG. 1 for a schematic block diagram of a wireless composite device in accordance with the first preferred embodiment of the present invention, the wireless composite device 1 sharing an AC-to-DC driving circuit comprises an antenna 10, an AC-to-DC driving circuit 11, an LED circuit board 12 and a router 13.

The antenna 10 is electrically coupled to the AC-to-DC driving circuit 11, wherein the transmission mode of the antenna 10 is a Bluetooth or WiFi mode. The AC-to-DC driving circuit 11 is electrically coupled to an external power supply 2, for converting an inputted AC of the external power supply 2 into an outputted DC according to a transmission signal of the antenna 10, and the AC-to-DC driving circuit 11 converts and outputs at least two constant DC voltages of 3.3 volts or 5.0 volts to meet a desired voltage requirement. The LED circuit board 12 is electrically coupled to the AC-to-DC driving circuit 11 and driven by the outputted DC, and the router 13 is also electrically coupled to the AC-to-DC driving circuit 11 and driven by the outputted DC, and the LED circuit board 12 and the router 13 are in a parallel with respect to each other.

Therefore, the wireless composite device 1 converts the inputted AC into the outputted DC by the AC-to-DC driving circuit 11 through a wireless communication method, while supplying the required electric power to the LED circuit board 12 and the router 13 to drive the router 13 and the LED circuit board directly, so as to combining and driving a plurality of electronic devices.

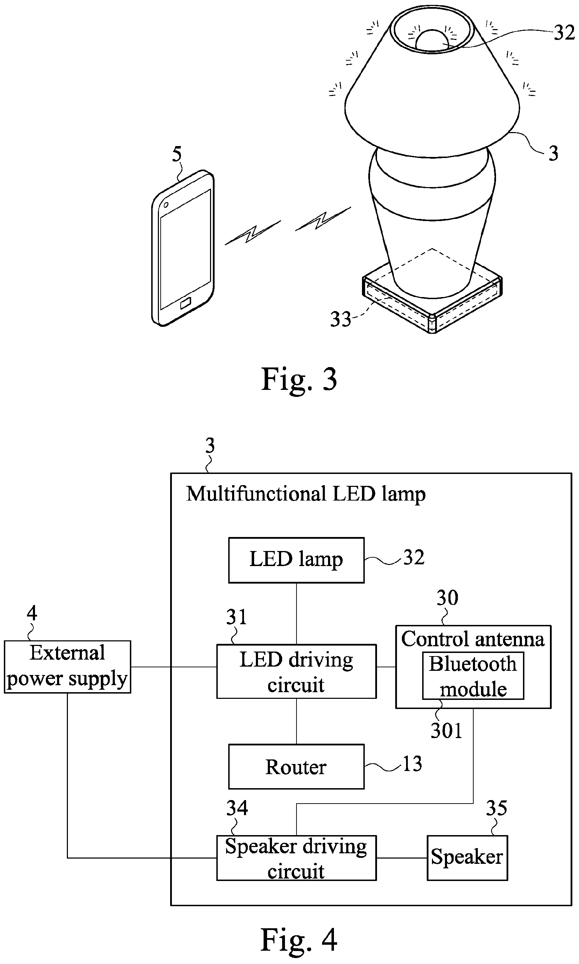

With reference to FIGS. 2 and 3 for a schematic block diagram of a second preferred embodiment of the present invention and a schematic view of an application of the second preferred embodiment of the present invention respectively, the present invention provides a multifunctional LED lamp 3 comprising a control antenna 30, an LED driving circuit 31, at least one LED lamp 32 and a router 33.

The control antenna 30 has a Bluetooth module 301 for performing a wireless communication through a Bluetooth communication protocol. The LED driving circuit 31 is electrically coupled to the control antenna 30 for converting an inputted AC of an external power supply 4 into an outputted DC according to a transmission signal of the control antenna 30, wherein the LED driving circuit 31 outputs at least two constant DC voltage of 3.3 volts or 5.0 volts and supplies the required voltage to the Bluetooth module 301, or generates other voltage values by making necessary adjustments. The LED lamp 32 is electrically coupled to the LED driving circuit 31 and driven by the outputted DC and serves as a light source to generate lights to the outside. The router 33 is also electrically coupled to the LED driving circuit and driven by the outputted DC, and the router 33 and the LED lamp 32 are installed in a parallel load with respect to each other.

Preferably, the Bluetooth module 301 is an embedded serial communication module electrically coupled to the LED driving circuit 31 through an external pin PI09. In addition, the multifunctional LED lamp 3 receives an instruction transmitted from a mobile device 5 through the Bluetooth module 301, so that a user may use the mobile device 5 to turn on/off or set the LED lamp 32 and the router 33 of the multifunctional LED lamp 3. Preferably, the mobile device 5 is a Smartphone or a tablet PC, and the mobile device 5 is a mobile phone in this embodiment.

With reference to FIG. 3 for an application of the multifunctional LED lamp 3, a user transmits an instruction from the mobile device 5 to the control antenna 30 through Bluetooth communication to control the ON/OFF and operation of the LED lamp 32 and the router 33. After the control antenna 30 receives the instruction through the Bluetooth module 301, the transmission signal is transmitted according to the user's instruction, so that the LED driving circuit 31 converts the inputted AC into the outputted DC. The outputted DC is transmitted to the LED lamp 32 and the router 33 to drive the LED lamp 32 and the router 33, so that the multifunctional LED lamp 3 may use a single external power supply 4 to provide the illumination function and allow users to connect to the network, so as to achieve the effects of saving the cost and the space required for installing the electronic device, and improve the convenience of use.

With reference to FIG. 4 for another implementation mode of the second preferred embodiment of the present invention, the multifunctional LED lamp 3 further comprises a speaker driving circuit 34 and a speaker 35, wherein the speaker driving circuit 34 is electrically coupled to the external power supply 4 for driving the speaker 35 to further broaden the scope of applicability of the multifunctional LED lamp 3. In the meantime, a user may turn on/off or control the operation of the speaker 35 through the mobile device 5. After the control antenna 30 receives the instruction from the mobile device 5 through the Bluetooth module 301, the speaker driving circuit 34 controls the operation of the speaker 35.

In the wireless composite device 1 of the present invention, the wireless communication method is used to control the AC-to-DC driving circuit 11 to convert the inputted AC of the external power supply 2 while supplying the required power to the LED circuit board 12 and the router 13. The invention combines different types of electronic products into an application, and the multifunctional lamp 3 converts the inputted AC of the external power supply 4 into an outputted DC by the LED driving circuit 31 and uses the wireless communication to control the related operation of the LED lamp 32 and the router 33, so that the multifunctional LED lamp 3 provides the illumination function and allows users to connect to the Internet, and even provides the broadcasting function through the speaker 35. Therefore, the multifunctional lamp 2 combines a variety of electronic products and lowers the installation cost and space. In addition, the user may control the operation of the multifunctional LED lamp 3 by the mobile device 5 from a remote end through the Bluetooth communication protocol, so as to further improve the convenience of use.

## Claims

1. A wireless composite device sharing an AC-to-DC driving circuit, comprising:
an antenna;
an AC-to-DC driving circuit, electrically coupled to the antenna, for converting an inputted AC of an external power supply into an outputted DC according to a transmission signal of the antenna;
an LED circuit board, electrically coupled to the AC-to-DC driving circuit, and driven by the outputted DC; and
a router, electrically coupled to the AC-to-DC driving circuit, and driven by the outputted DC, and the LED circuit board and the router being installed in a parallel load setting with respect to each other.

2. The wireless composite device as claimed in claim 1, wherein the antenna has a transmission mode in Bluetooth or WiFi mode.

3. The wireless composite device as claimed in claim 2, wherein the AC-to-DC driving circuit converts and outputs at least two constant DC voltages of 3.3 volts or 5.0 volts.

4. A multifunctional LED lamp, comprising:
a control antenna, having a Bluetooth module;
an LED driving circuit, electrically coupled to the control antenna, for converting an inputted AC of an external power supply into an outputted DC according to a transmission signal of the control antenna;
at least one LED lamp, electrically coupled to the LED driving circuit, and driven by the outputted DC; and
a router, electrically coupled to the LED driving circuit, and driven by the outputted DC, and the LED lamp and the router being installed in a parallel load setting with respect to each other.

5. The multifunctional LED lamp as claimed in claim 4, wherein the LED driving circuit converts and outputs at least two constant DC voltages of 3.3 volts or 5.0 volts.

6. The multifunctional LED lamp as claimed in claim 4, wherein the Bluetooth module is an embedded serial communication module electrically coupled to the LED driving circuit through an external pin PI09.

7. The multifunctional LED lamp as claimed in claim 6, further comprising a speaker driving circuit and a speaker, and the speaker driving circuit being electrically coupled to the external power supply for driving the speaker.

8. The multifunctional LED lamp as claimed in claim 7, wherein the LED lamp, the router and the speaker are turned on or off and operated by a mobile device.

9. The multifunctional LED lamp as claimed in claim 8, wherein the mobile device is a Smartphone or a tablet PC.

10. The multifunctional LED lamp as claimed in claim 5, wherein the Bluetooth module is an embedded serial communication module electrically coupled to the LED driving circuit through an external pin PI09.

11. The multifunctional LED lamp as claimed in claim 10, further comprising a speaker driving circuit and a speaker, and the speaker driving circuit being electrically coupled to the external power supply for driving the speaker.

12. The multifunctional LED lamp as claimed in claim 11, wherein the LED lamp, the router and the speaker are turned on or off and operated by a mobile device.

13. The multifunctional LED lamp as claimed in claim 12, wherein the mobile device is a Smartphone or a tablet PC.
